# FASCICULE DE BREVET EUROPEEN

(11) **EP 1 057 238 B1**
(45) Date de publication et mention de la délivrance du brevet: **11.06.2003**
(21) Numéro de dépôt: 99961100.7
(22) Date de dépôt: 17.12.1999
(51) Int. Cl.: H02K 1/27

(54) **MACHINE ELECTRIQUE TOURNANTE A AIMANTS PERMANENTS ET A RELUCTANCE POSSEDANT DES CAPACITES DE DEFLUXAGE AMELIOREES**
ELEKTRISCHE ROTATIONSMASCHINE MIT PERMANENTMAGNETEN UND RELUKTANZ DIE VERBESSERTE FELDSCHWÄCHEIGENSCHAFTEN AUFWEIST
ROTATING ELECTRIC MACHINE WITH PERMANENT MAGNETS AND MAGNETIC RESISTANCE WITH IMPROVED FLUX WEAKENING PROPERTIES

(30) Priorité: 18.12.1998 FR 9816180
(43) Date de publication de la demande: 06.12.2000
(73) Titulaire: VALEO EQUIPEMENTS ELECTRIQUES MOTEUR, 94000 Créteil (FR)
(72) Inventeur: AKEMAKOU, Dokou, Antoine, F-94400 Vitry-sur-Seine (FR)
(74) Mandataire: Le Forestier, Eric
(86) Numéro de dépôt international: FR9903180
(87) Numéro de publication internationale: WO00038298

(56) Documents cités:
- EP-A- 0 544 310
- EP-A- 0 695 018
- EP-A- 0 834 979
- XU ET AL.: "A New Design Concept of Permanent Magnet Machine for Flux Weakening Operation" IEEE TRANSACTIONS ON INDUSTRY APPLICATIONS, vol. 31, no. 2, mars 1995 (1995-03) - avril 1995 (1995-04), pages 373-378, XP000513109 New York, US
- PATENT ABSTRACTS OF JAPAN vol. 7, no. 33 (E-157) [1178], 9 février 1983 (1983-02-09) & JP 57 186965 A (HITACHI SEISAKUSHO), 17 novembre 1982 (1982-11-17)

## Description

La présente invention concerne d'une façon générale les machines électriques tournantes, et en particulier une machine tournante synchrone possédant un rotor à aimants permanents.

On connaît déjà dans l'état de la technique une machine tournante dont le rotor possède une série d'aimants permanents agencés en surface ou enterrés à une certaine distance au-dessous de la surface du rotor, de manière à définir une répartition appropriée de pôles Sud et Nord.

Une telle machine possédant une excitation imposée de façon permanente par les aimants, il est nécessaire de prévoir des dispositions pour autoriser un défluxage de la machine, c'est à dire la circulation d'un flux ne coopérant pas magnétiquement avec les enroulements d'induit formés au stator, en particulier dans le cas où cette machine opère dans des conditions de fonctionnement sous faible charge.

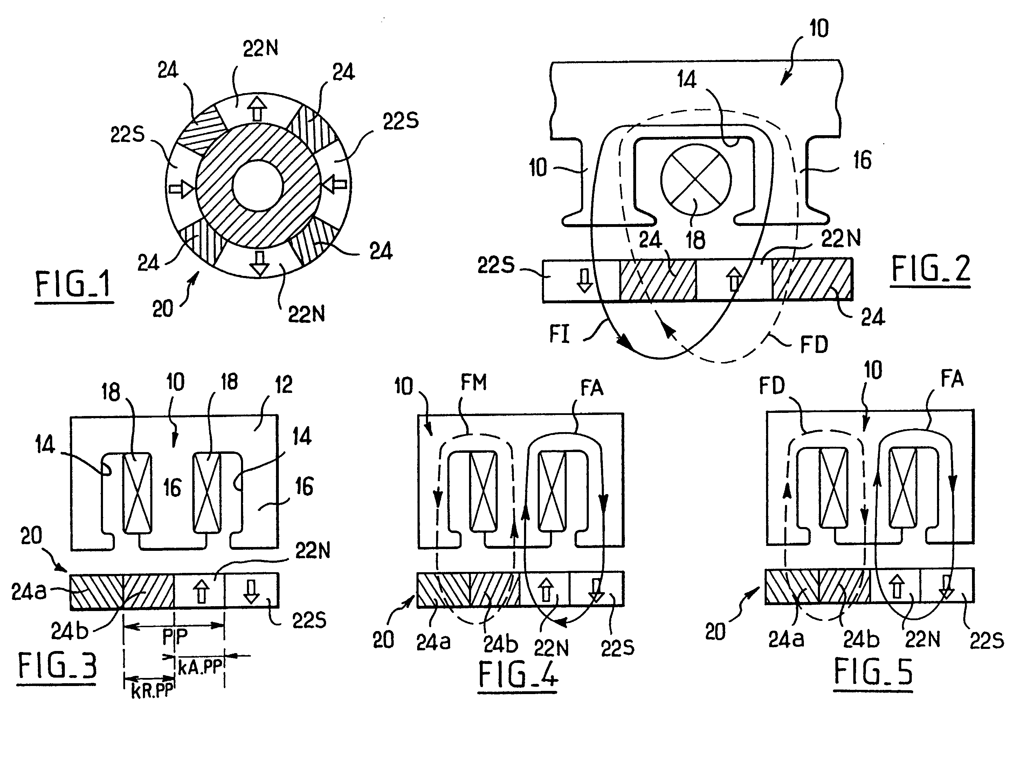

Une solution connue à ce problème est illustrée sur la figure 1, où l'on a illustré un rotor 20 qui comprend des aimants 22S définissant des pôles sud et des aimants 22N définissant des pôles Nord, en alternance. Cette solution connue consiste à interposer entre chaque paire d'aimants adjacents une pièce magnétique de défluxage 24, ces pièces étant aptes à coopérer avec les pôles du stator pour autoriser le défluxage requis.

On a par ailleurs illustré sur la figure 2, de façon développée, le comportement schématisé et imagé de ce rotor en coopération avec un stator 10 possédant des dents 16 délimitées par des encoches 14 abritant des bobinages d'induit 18, avec un flux induit FI créé par les aimants et un flux inverse de défluxage FD. On observe sur cette figure que le flux induit et le flux de défluxage son mal individualisés, et l'on a constaté que cette superposition partielle des flux induits et des flux de défluxage, circulant dans des sens inverses, limitait les capacités de défluxage de la machine.

Le document EP-A-0 695 018 décrit une machine électrique tournante conforme au préambule de la revendication 1.

La présente invention a pour premier objet de pallier cet inconvénient.

Un autre objet de l'invention est de réduire les ondulations de couples rencontrées lors du fonctionnement de la machine.

Ainsi la présente invention propose une machine électrique tournante telle que définie dans la revendication 1.

Des aspects préférés, mais non limitatifs, de la machine tournante de la présente invention sont définis dans les revendications dépendantes.

D'autres aspects, buts et avantages de la présente invention apparaîtront mieux à la lecture de la description détaillée suivante de diverses formes de réalisation de celle-ci, donnée à titre d'exemple non limitatif et faite en référence aux dessins annexés, sur lesquels, outre les figures 1 et 2 déjà décrites:
la figure 3 est une vue schématique développée d'une partie du stator et d'une partie du rotor d'une machine selon une première forme de réalisation de base de la présente invention,
la figure 4 illustre le comportement de la machine de la figure 3 dans une situation de fonctionnement normal,
la figure 5 illustre le comportement de cette même machine dans une situation de fonctionnement en défluxage,
la figure 6 est une vue partielle d'une machine tournante selon l'invention,
la figure 7 est une vue partielle du rotor d'une machine selon une variante d'exécution,
la figure 8 est une vue développée en plan du rotor d'une machine selon une deuxième forme de réalisation de l'invention,
la figure 9 est une vue en perspective du rotor correspondant à la vue développée de la figure 8,
la figure 10 est une vue développée en plan du rotor d'une machine selon une troisième forme de réalisation de l'invention, et
la figure 11 est une vue en perspective du rotor correspondant à la vue développée de la figure 10.

En référence tout d'abord à la figure 3, on a représenté schématiquement de façon développée une machine tournante qui comprend un stator externe 10 de construction classique, dont la carcasse 12 définit une pluralité d'encoches 14 délimitées deux à deux par des dents 16 formant pôles. Les encoches 14 abritent des bobinages d'induit 18, monophasés ou polyphasés.

Le rotor 20 comprend à sa périphérie deux aimants 22N et 22S à flux radial, disposés à la périphérie du rotor, et deux pièces magnétiques à réluctance 24a et 24b. Les deux aimants sont adjacents l'un à l'autre, de même que les pièces magnétiques 24a et 24b. Dans la pratique, on trouvera en succession à la périphérie du rotor, en direction tangentielle, une paire d'aimants 22N, 22S, puis une paire de pièces magnétiques 24a, 24b, puis à nouveau une paire d'aimants, et ainsi de suite.

Un pas polaire PP du rotor est déterminé par l'étendue en direction tangentielle (qui correspond à la direction horizontale sur la figure 3), d'un aimant tel que 22N cumulée avec l'étendue de la pièce magnétique adjacente 24b (pôle Nord). De même, un autre pas polaire de môme étendue est déterminée par les étendues cumulées d'un aimant 22S et de la pièce magnétique adjacente 24a (pôle Sud). On comprend donc que, selon l'invention, alors qu'un pôle donné est constitué, dans un sens tangentiel donné, par la succession d'une partie formée d'un aimant suivie d'une partie à réluctance pour le défluxage, le pôle suivant est constitué, dans le même sens tangentiel, par la succession d'une partie à réluctance suivie d'une partie à aimant.

kA et kR sont des coefficients, tous deux inférieurs à 1 et avec kA+kR=1, représentatif des étendues relatives de l'aimant et de la pièce magnétique dans le pas polaire correspondant.

Grâce à une telle structure de rotor, et en particulier grâce au regroupement côte-à-côte des aimants permanents correspondant à deux pôles successifs n et n+1, et au regroupement des pièces magnétiques correspondant à deux pôles successifs n+1 et n+2, on améliore les qualités de défluxage de la machine. On a constaté également que cet agencement permettait avantageusement de réduire les ondulations de couple lors du fonctionnement de la machine.

En particulier, si l'on se tourne maintenant vers la figure 4, on observe qu'en fonctionnement normal, le flux magnétisant de l'induit FM, qui circule ici dans le même sens que le flux FA créé par les aimants dans les pôles du stator, est bien individualisé par rapport au flux des aimants. En corollaire, et comme le montre la figure 5, un flux de défluxage FD orienté en sens inverse du flux magnétisant de la figure 4 va se trouver aussi individualisé par rapport au flux des aimants FA. De la sorte, pour un coefficient kR donné, on va pouvoir améliorer la quantité de flux de défluxage possible car le flux des aimants ne crée pas de barrière significative à celui-ci.

On observera ici que le choix des coefficients kA et kR permet d'ajuster à la conception la capacité de défluxage de la machine. On obtient une large plage de défluxages pour kR voisin de kA, c'est-à-dire kA et kR voisins chacun de 0,5.

Une machine tournante selon l'invention présente d'autres avantages; en particulier, le fait que deux aimants puissent être regroupés dans une encoche commune simplifie la découpe des tôles destinées à être empilées pour former la carcasse de rotor; en outre, on peut prévoir de réaliser les aimants 22N et 22S en un seul bloc, qui sera ensuite aimanté in situ de façon à définir l'aimant 22N appartenant à un pôle Nord et l'aimant 22S appartenant à un pôle Sud.

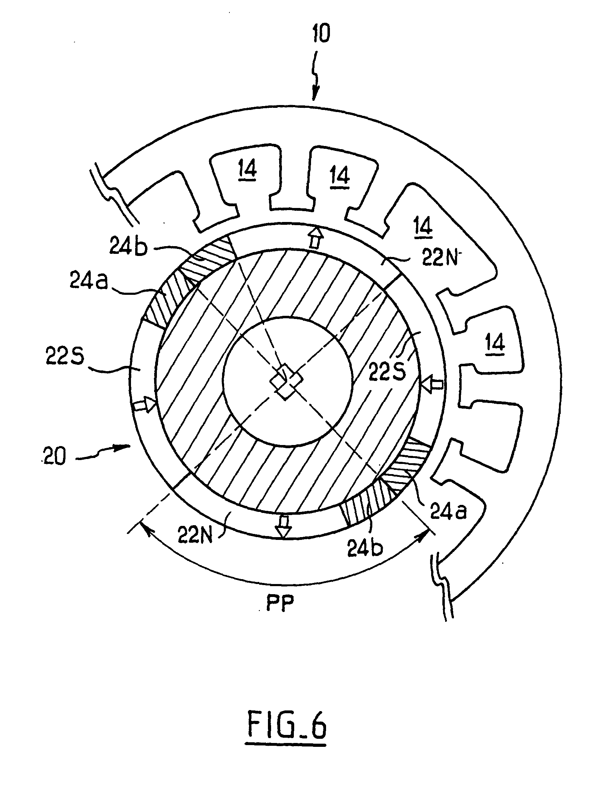

La figure 6 illustre partiellement une machine tournante selon l'invention, possédant deux paires de pôles. Ainsi le rotor possède à sa périphérie deux paires d'aimants 22N, 22S alternés avec deux paires de pièces magnétiques 24a et 24b.

Le stator est ici un stator triphasé.

Bien entendu, on peut prévoir un rotor avec un nombre quelconque de paires d'aimants alternés avec des pièces magnétiques.

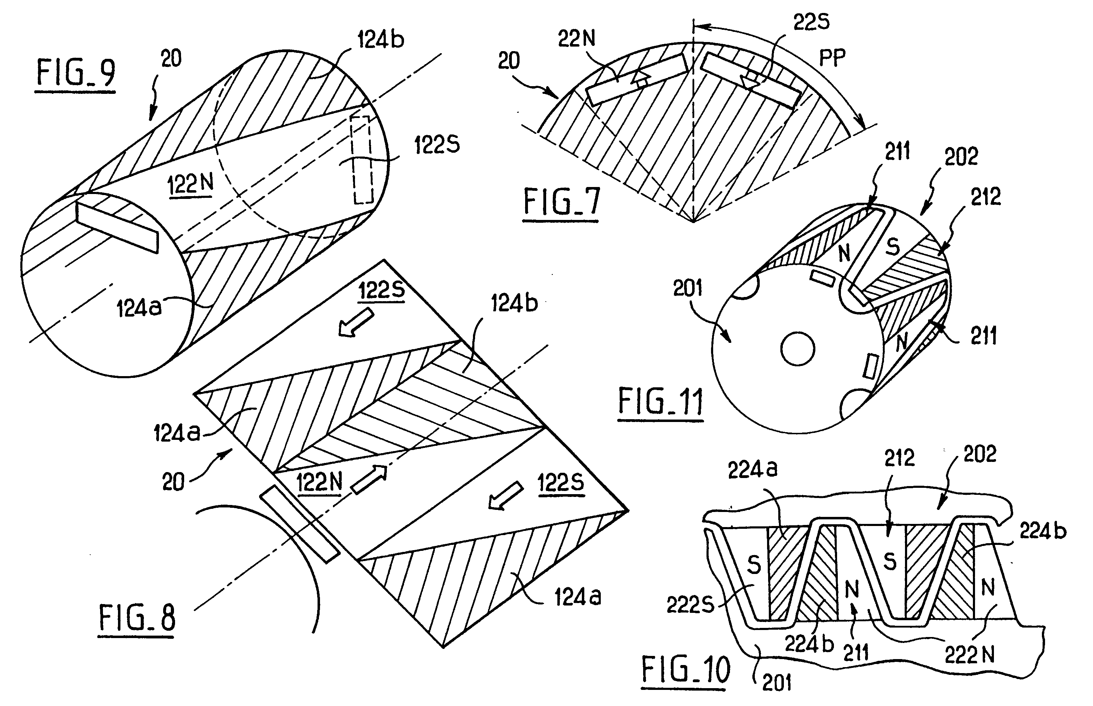

La figure 7 illustre une variante de réalisation de l'invention, selon laquelle les aimants 22N et 22S sont non pas disposés en surface, mais enterrés à une profondeur donnée dans la carcasse du rotor.

En référence maintenant aux figures 8 et 9, on a illustré un rotor possédant des aimants triangulaires à flux axial. Plus précisément, un aimant Nord 122N présente la forme générale d'un triangle rectangle dont un grand côté est parallèle à l'axe de rotation et dont un petit côté affleure à une extrémité axiale du rotor pour définir un pôle. Cet aimant Nord 122N est adjacent, par son grand côté, au grand côté d'un aimant Sud 122S orienté tête-bêche, qui définit par son petit côté un pôle à l'extrémité opposée. Des parties magnétiques à réluctance 124a, 124b s'étendent le long des aimants à partir de leurs hypoténuses.

Ici encore, on peut prévoir un nombre quelconque de paires d'aimants 122N, 122S en alternance avec un nombre correspondant de paires de pièces magnétiques.

Une telle structure de rotor est adaptée notamment à coopérer avec un bobinage de surexcitation ou de désexcitation à flux axial agencé dans le stator.

Les figures 10 et 11 illustrent quant à elles l'application de la présente invention au cas d'un rotor à griffes.

Un tel rotor à griffes possède, de façon classique en soi, une première pièce 201possédant une première série de griffes généralement triangulaires 211 et une seconde pièce 202 possédant une seconde série de griffes généralement triangulaires 212, ces griffes s'imbriquant les unes dans les autres.

Dans ce cas, chaque griffe 211 de la première série possède, dans un sens tangentiel donné (de la gauche vers la droite sur la figure 10), une pièce magnétique à réluctance 224b suivie d'un aimant 222N définissant un pôle Nord, tandis que chaque griffe 212 de la seconde série possède, dans le même sens, un aimant 222S définissant un pôle Sud suivi d'une pièce magnétique à réluctance 224a. On retrouve ainsi une structure d'aimants et de pièces magnétiques de réluctance analogue à celle des figures 3 à 6.

En particulier, en fonction de la capacité de défluxage souhaitée, on peut comme on l'a déjà indiqué jouer sur les étendues relatives des aimants et des pièces magnétiques à réluctance.

La présente invention s'applique notamment aux alternateurs et alterno-démarreurs de véhicules automobiles.

## Revendications

1. Machine électrique tournante, notamment un alternateur ou un alterno-démarreur de véhicule automobile, comprenant un stator (10) équipé de bobinages d'induit (18) et un rotor (20) monté rotatif à l'intérieur du stator, le rotor possédant une série d'aimants (22N, 22S ; 122N, 122S ; 222N, 222S) de polarités alternées jouxtés par des parties magnétiques à réluctance (24a, 24b ; 124a, 124b ; 224a, 224b) associées respectivement auxdits aimants, chaque ensemble d'un aimant et d'une partie magnétique associée définissant un pôle de rotor, **caractérisé en ce que** chacune des parties magnétiques est individuellement associée à un aimant, et **en ce qu'**au moins certains desdits pôles possèdent alternativement, suivant une direction généralement tangentielle, un aimant (22S ; 122S ; 222S) suivi de sa partie magnétique (24a ; 124a ; 224a) et un aimant (22N ; 122N ; 222N) précédé de sa partie magnétique (24b ; 124b ; 224b).

2. Machine selon la revendication 1, **caractérisé en ce que** le rotor (20) possède, suivant ladite direction généralement tangentielle, des paires d'aimants adjacents (22N, 22S ; 122N, 122S ; 222N, 222S) correspondant à des pôles n et n+1 en alternance avec des paires de parties magnétiques adjacentes (24a, 24b ; 124a, 124b ; 224a, 224b) correspondant à des pôles n+1 et n+2.

3. Machine selon l'une des revendications 1 et 2, **caractérisée en ce que** les aimants (22N, 22S ; 222N, 222S) sont des aimants à flux radial.

4. Machine selon la revendication 3, **caractérisée en ce que** les aimants (22N, 22S ; 222N, 222S) sont montés en surface.

5. Machine selon la revendication 3, **caractérisée en ce que** les aimants (22N, 22S ; 222N, 222S) sont enterrés à une distance prédéterminée au-dessous de la périphérie du rotor.

6. Machine selon l'une des revendications 1 à 5, **caractérisée en ce que** l'aimant (22N ; 22S) et la partie magnétique associée (24a, 24b) dans un même pôle présentent des étendues (kA.PP ; kR.PP) voisines dans ladite direction circonférentielle.

7. Machine selon l'une des revendications 1 à 6, **caractérisée en ce que** les aimants (122N, 122S ; 222N, 222S) présentent une forme généralement triangulaire, deux aimants successifs étant orientés tête-bêche.

8. Machine selon l'une des revendications 1 à 7, **caractérisée en ce que** les pôles du rotor sont définis par des griffes imbriquées (211, 212) de deux parties de rotor (201, 202).

## Patentansprüche

1. Rotierende elektrische Maschine, insbesondere ein Wechselstromgenerator oder ein Anlassergenerator für Kraftfahrzeuge, umfassend einen Ständer (10) mit Ankerwicklungen (18) und einen drehbar im Innern des Ständers gelagerten Läufer (20), wobei der Läufer eine Reihe von Magneten (22N, 22S; 122N, 122S; 222N, 222S) mit abwechselnden Polungen nebeneinander angeordnet mit jeweils den besagten Magneten zugeordneten magnetischen Reluktanzteilen (24a, 24b; 124a, 124b; 224a, 224b) umfaßt, wobei jede Baueinheit aus einem Magneten und einem zugehörigen magnetischen Teil einen Läuferpol definiert, **dadurch gekennzeichnet**, d a ß jeder der magnetischen Teile einzeln einem Magneten zugeordnet ist und d a ß wenigstens einige der besagten Pole abwechselnd, entlang einer allgemein tangentialen Richtung, einen Magneten (22A; 122S; 222S) vor seinem magnetischen Teil (24a; 124a; 224a) und einen Magneten (22A; 122N; 222N) hinter seinem magnetischen Teil (24b; 124b; 224b) besitzen.

2. Maschine nach Anspruch 1, **dadurch gekennzeichnet, daß** der Läufer (20), entlang der besagten allgemein tangentialen Richtung, Paare von benachbarten Magneten (22N, 22S; 122N, 122S; 222N, 222S) umfaßt, die Polen n und n+1 entsprechen, in abwechselnder Folge mit Paaren von benachbarten magnetischen Teilen (24a, 24b; 124a, 124b; 224a, 224b), die Polen n+1 und n+2 entsprechen.

3. Maschine nach einem der Ansprüche 1 und 2, **dadurch gekennzeichnet, daß** die Magneten (22N, 22S; 222N, 222S) Magneten mit radialem Fluß sind.

4. Maschine nach Anspruch 3, **dadurch gekennzeichnet, daß** die Magneten (22N, 22S; 222N, 222S) an der Oberfläche angebracht sind.

5. Maschine nach Anspruch 3, **dadurch gekennzeichnet, daß** die Magneten (22N, 22S; 222N, 222S) in einem vorbestimmten Abstand unterhalb des Umfangs des Läufers eingelassen sind.

6. Maschine nach einem der Ansprüche 1 bis 5, **dadurch gekennzeichnet, daß** der Magnet (22N; 22S) und der zugehörige magnetische Teil (24a, 24b) in einem gleichen Pol benachbarte Ausdehnungen (kA.PP; kR.PP) in der besagten Umfangsrichtung aufweisen.

7. Maschine nach einem der Ansprüche 1 bis 6, **dadurch gekennzeichnet, daß** die Magneten (122N, 122S; 222N, 222S) eine allgemein dreieckige Form aufweisen, wobei zwei aufeinanderfolgende Magneten entgegengesetzt angeordnet sind.

8. Maschine nach einem der Ansprüche 1 bis 7, **dadurch gekennzeichnet, daß** die Pole des Läufers durch ineinander verzahnte Klauen (211, 212) von zwei Läuferkeilen (201, 202) definiert sind.

## Claims

1. Rotary electrical machine, in particular an alternator or an alternator-starter for a motor vehicle, comprising a stator (10) equipped with armature windings (18) and a rotor (20) mounted so as to rotate inside the stator, the rotor having a series of magnets (22N, 22S; 122N, 122S; 222N, 222S) with alternating polarities juxtaposed with magnetic parts with reluctance (24a, 24b; 124a, 124b; 224a, 224b) associated respectively with the said magnets, each set consisting of a magnet and an associated magnetic part defining a rotor pole, **characterised in that** each of the magnetic parts is individually associated with a magnet, and **in that** at least some of the said poles have in alternation, in a generally tangential direction, a magnet (22S; 122S; 222S) followed by its magnetic part (24a; 124a; 224a) and a magnet (22N; 122N; 222N) preceded by its magnetic part (24b; 124b; 224b).

2. Machine according to Claim 1, **characterised in that** the rotor (20) has, in the said generally tangential direction, pairs of adjacent magnets (22N; 22S; 122N, 122S; 222N, 222S) corresponding to poles n and n+1 in alternation with pairs of adjacent magnetic parts (24a, 24b; 124a, 124b; 224a, 224b) corresponding to poles n+1 and n+2.

3. Machine according to one of Claims 1 and 2, **characterised in that** the magnets (22N, 22S; 222N, 222S) are radial-flux magnets.

4. Machine according to Claim 3, **characterised in that** the magnets (22N, 22S; 222N, 222S) are surface mounted.

5. Machine according to Claim 3, **characterised in that** the magnets (22N, 22S; 222N, 222S) are buried at a predetermined distance below the periphery of the rotor.

6. Machine according to one of Claims 1 to 5, **characterised in that** the magnet (22N; 22S) and the associated magnetic part (24a, 24b) in one and the same pole have areas (kA.PP; kR.PP) which are adjacent in the said circumferential direction.

7. Machine according to one of Claims 1 to 6, **characterised in that** the magnets (122N, 122S; 222N, 222S) have a roughly triangular shape, two successive magnets being oriented in opposite directions.

8. Machine according to one of Claims 1 to 7, **characterised in that** the poles of the rotor are defined by overlapping claws (211, 212) of two rotor parts (201, 202).
